# EUROPÄISCHE PATENTANMELDUNG

(11) **EP 4 790 945 A1**
(43) Veröffentlichungstag der Anmeldung: **12.08.2026**
(21) Anmeldenummer: 25156822.6
(22) Anmeldetag: 10.02.2025
(51) Int. Cl.: H04L 9/08, H04L 9/32, H04L 9/00

(54) **VERFAHREN ZUR VERIFIZIERUNG EINES ERSTEN PRIVATEN SCHLÜSSELS, ENDVORRICHTUNG, SYSTEM, COMPUTERPROGRAMM UND COMPUTERLESBARES SPEICHERMEDIUM**

(71) Anmelder: Deutsche Bundesbank, 60431 Frankfurt am Main (DE); Quantum Optics Jena GmbH, 07745 Jena (DE)
(72) Erfinder: Grytz, Max, 60431 Frankfurt am Main (DE); Rentoumis, Vasileios Leonidas, 60431 Frankfurt am Main (DE); Kazan, Erol, 60431 Frankfurt am Main (DE); Füchsel, Kevin, 07745 Jena (DE); de Vries, Oliver, 07745 Jena (DE)
(74) Vertreter: Epping - Hermann - Fischer

(57) **Zusammenfassung**

Es wird ein Verfahren zur Verifizierung eines ersten privaten Schlüssels angegeben, der mittels Quantenschlüsselverteilung erzeugt ist, umfassend ein Bereitstellen des ersten privaten Schlüssels an eine Endbenutzerapplikation (2) von einer Benutzerapplikation (4) einer ersten Vorrichtung (5) über eine lokale Verbindung (8), ein Senden einer ersten Identifikationsinformation von der Endbenutzerapplikation (2) oder der Benutzerapplikation (4) an eine Zwischeninstanz (6), wobei die erste Identifikationsinformation charakteristisch für den ersten privaten Schlüssel ist, ein Empfangen einer Verifizierungsantwort von der Endbenutzerapplikation (2) oder der Benutzerapplikation (4) von der Zwischeninstanz (6), wobei die Verifizierungsantwort charakteristisch ist für einen Abgleich der ersten Identifikationsinformation und einer zweiten Identifikationsinformation, wobei die zweite Identifikationsinformation charakteristisch ist für den zweiten privaten Schlüssel, der auf einer zweiten Vorrichtung (7) hinterlegt ist, und ein Verifizieren des ersten privaten Schlüssels von der Endbenutzerapplikation (2) oder der Benutzerapplikation (4) in Abhängigkeit der Verifizierungsantwort.

Des Weiteren werden eine Endvorrichtung, ein System, ein Computerprogramm und ein computerlesbares Speichermedium angegeben.

## Beschreibung

Es wird ein Verfahren zur Verifizierung eines ersten privaten Schlüssels angegeben. Darüber hinaus werden eine Endvorrichtung, ein System, ein Computerprogramm und ein computerlesbares Speichermedium angegeben.

Typischerweise erzeugt ein Kopieren und/oder ein Übertragen eines erzeugten privaten Schlüssels ein Sicherheitsrisiko, da dieser erzeugte private Schlüssel eine sichere Speicherumgebung verlassen muss. Beispielsweise kann der zu kopierende und/oder zu übertragende erzeugte private Schlüssel von Dritten abgefangen werden.

Eine zu lösende Aufgabe besteht darin, ein Verfahren anzugeben, bei dem eine Integrität eines privaten Schlüssels verifiziert werden kann. Des Weiteren sollen eine Endvorrichtung, ein System und ein Computerprogramm angegeben werden, die ein solches Verfahren ausführen können. Darüber hinaus soll ein computerlesbares Speichermedium mit einem derartigen Computerprogramm angegeben werden.

Diese Aufgaben werden durch das Verfahren und die Gegenstände der unabhängigen Patentansprüche gelöst. Vorteilhafte Ausgestaltungen, Implementierungen und Weiterbildungen sind Gegenstand der jeweils abhängigen Patentansprüche.

Zunächst wird das Verfahren zur Verifizierung eines ersten privaten Schlüssels, der zusammen mit einem zweiten privaten Schlüssel quantensicher mittels Quantenschlüsselverteilung erzeugt ist, erläutert.

Insbesondere handelt es sich bei dem ersten privaten Schlüssel und dem zweiten privaten Schlüssel jeweils um einen geheimen Teil eines Schlüsselpaares. Beispielsweise ist der erste private Schlüssel dazu ausgebildet in asymmetrischen Verschlüsselungsverfahren verwendet zu werden. Zusätzlich kann der zweite private Schlüssel dazu ausgebildet sein in asymmetrischen Verschlüsselungsverfahren verwendet zu werden. Der erste private Schlüssel kann insbesondere dazu verwendet werden, Daten zu entschlüsseln, und/oder eine digitale Signatur zu erzeugen.

Der erste private Schlüssel und der zweite private Schlüssel werden beispielsweise durch die Quantenschlüsselverteilung zusammen erzeugt und sind insbesondere gleich zueinander. Der erste private Schlüssel und der zweite private Schlüssel sind beispielsweise gleich zueinander, wenn bei der Erzeugung des ersten privaten Schlüssels und des zweiten privaten Schlüssels kein Abgriff, insbesondere kein Abhörversuch, stattfindet. Die Quantenschlüsselverteilung, englisch "Quantum Key Distribution", kurz QKD, umfasst eine quantensichere Erzeugung und Verteilung von kryptografischen Schlüsseln, insbesondere des ersten privaten Schlüssels und des zweiten privaten Schlüssels, mittels Photonen.

"Quantensicher" bedeutet, dass kryptografische Verfahren insbesondere gegen Angriffe von Quantencomputern resistent sind. Der Begriff "quantensicher" wird hier und im Folgenden auch als "quantenresistent" bezeichnet. "Quantensicher" im Kontext der Quantenschlüsselverteilung bedeutet, dass die Erzeugung und die Verteilung des ersten privaten Schlüssels und des zweiten privaten Schlüssels selbst nicht durch Quantencomputer abgegriffen werden können, da insbesondere jeder versuchte Abgriff physikalisch nachweisbar wäre. Beispielsweise sind erste private Schlüssel und der zweite private Schlüssel bei einem versuchten Abgriff nicht gleich zueinander.

Gemäß zumindest einer Ausführungsform des Verfahrens wird der erste private Schlüssel an eine Endbenutzerapplikation von einer Benutzerapplikation einer ersten Vorrichtung über eine lokale Verbindung bereitgestellt. Die Endbenutzerapplikation ist beispielsweise eine Softwareanwendung, die beispielsweise auf einer Endvorrichtung ausgeführt wird. Die Benutzerapplikation ist beispielsweise eine weitere Softwareanwendung, die beispielsweise auf der ersten Vorrichtung ausgeführt wird.

Insbesondere wird der erste private Schlüssel an die Endbenutzerapplikation von der Benutzerapplikation durch die lokale Verbindung bereitgestellt. Die Endbenutzerapplikation und die Benutzerapplikation sind beispielsweise bei Durchführung des Verfahrens, insbesondere bei der Bereitstellung des ersten privaten Schlüssels an die Endbenutzerapplikation, signaltechnisch durch die lokale Verbindung verbunden. Beispielsweise sind die Endbenutzerapplikation und die Benutzerapplikation Teil eines lokalen Netzwerks bei Durchführung des Verfahrens, insbesondere bei der Bereitstellung des ersten privaten Schlüssels an die Endbenutzerapplikation. Nach Bereitstellung des ersten privaten Schlüssels, insbesondere nach dem Empfang des ersten privaten Schlüssels von der Endbenutzerapplikation, kann die lokale Verbindung getrennt werden.

Beispielsweise ist die lokale Verbindung zwischen der Endbenutzerapplikation und der Benutzerapplikation eine Punkt-zu-Punkt Verbindung. Die lokale Verbindung zwischen der Endbenutzerapplikation und der Benutzerapplikation kann eine drahtlose Verbindung, beispielsweise eine Nahfeldverbindung, englisch "Near-Field Communication", kurz NFC, sein. Alternativ oder zusätzlich kann die lokale Verbindung zwischen der Endbenutzerapplikation und der Benutzerapplikation eine drahtgebundene Verbindung sein, beispielsweise eine USB-Verbindung, englisch "Universal Serial Bus", kurz USB. Beispielsweise wird ein NFC-Protokoll oder ein USB-Protokoll, oder bei anderen Punkt-zu-Punkt Verbindungen ein DTLS-Protokoll, kurz für "Datagram Transport Layer Security", für die Kommunikation über die lokale Verbindung zwischen der Endbenutzerapplikation und der Benutzerapplikation verwendet.

Beispielsweise wird der erste private Schlüssel von der ersten Vorrichtung erzeugt oder bereitgestellt und insbesondere nachfolgend wird der erste private Schlüssel der ersten Vorrichtung bereitgestellt. Insbesondere wird der erste private Schlüssel von der ersten Vorrichtung zu der Endbenutzerapplikation übertragen. Dass der erste Schlüssel der Endbenutzerapplikation bereitgestellt wird, bedeutet, dass die Endbenutzerapplikation den ersten privaten Schlüssel von der ersten Vorrichtung empfängt.

Gemäß zumindest einer Ausführungsform des Verfahrens wird eine erste Identifikationsinformation von der Endbenutzerapplikation oder der Benutzerapplikation an eine Zwischeninstanz gesendet, wobei die erste Identifikationsinformation charakteristisch für den ersten privaten Schlüssel ist. Beispielsweise ist die Endbenutzerapplikation dazu ausgebildet die erste Identifikationsinformation zu erzeugen und an die Zwischeninstanz zu senden. Alternativ oder zusätzlich ist die Benutzerapplikation dazu ausgebildet die erste Identifikationsinformation zu erzeugen und an die Zwischeninstanz zu senden. Es ist möglich, dass die Endbenutzerapplikation und die Benutzerapplikation beide jeweils die erste Identifikationsinformation an die Zwischeninstanz senden.

Die erste Identifikationsinformation wird beispielsweise in Abhängigkeit des ersten privaten Schlüssels erzeugt. Zum Beispiel wird ein erster öffentlicher Schlüssel in Abhängigkeit des ersten privaten Schlüssels erzeugt. Nachfolgend wird die erste Identifikationsinformation in Abhängigkeit des ersten öffentlichen Schlüssels erzeugt.

Die Endbenutzerapplikation ist beispielsweise mit der Zwischeninstanz über ein Netzwerk mit der Zwischeninstanz verbunden, wobei die erste Identifikationsinformation insbesondere über das Netzwerk gesendet wird. Alternativ oder zusätzlich ist die Benutzerapplikation beispielsweise mit der Zwischeninstanz über das Netzwerk mit der Zwischeninstanz verbunden, wobei die erste Identifikationsinformation insbesondere über das Netzwerk gesendet wird.

Beispielsweise ist das Netzwerk Teil eines "Wide Area Networks", kurz WAN, insbesondere ist das Netzwerk Teil des Internets. Beispielsweise wird ein TLS/SSL Protokoll, kurz für "Transport Layer Security" und "Secure Sockets Layer" für die Kommunikation über das Netzwerk, zum Beispiel zwischen der Endbenutzerapplikation und der Zwischeninstanz, verwendet und/oder für die Kommunikation über das Netzwerk zwischen der Benutzerapplikation und der Zwischeninstanz.

Insbesondere ist die lokale Verbindung zwischen der Endbenutzerapplikation und der Benutzerapplikation und eine Netzwerkverbindung durch das Netzwerk zwischen der Endbenutzerapplikation und der Zwischeninstanz verschieden voneinander. Insbesondere umfassen die lokale Verbindung und die Netzwerkverbindung verschiedene Protokolle, die für die entsprechende Kommunikation verwendet werden.

Gemäß zumindest einer Ausführungsform des Verfahrens wird einer Verifizierungsantwort von der Endbenutzerapplikation oder der Benutzerapplikation von der Zwischeninstanz empfangen, wobei die Verifizierungsantwort charakteristisch ist für einen Abgleich der ersten Identifikationsinformation und einer zweiten Identifikationsinformation, wobei die zweite Identifikationsinformation charakteristisch ist für den zweiten privaten Schlüssel, der auf einer zweiten Vorrichtung hinterlegt ist.

Falls nur die Endbenutzerapplikation die erste Identifikationsinformation an die Zwischeninstanz sendet, empfängt die Endbenutzerapplikation die Verifizierungsantwort von der Zwischeninstanz. Falls nur die Benutzerapplikation die erste Identifikationsinformation an die Zwischeninstanz sendet, empfängt die Benutzerapplikation die Verifizierungsantwort von der Zwischeninstanz. Falls die Endbenutzerapplikation und die Benutzerapplikation beide jeweils die erste Identifikationsinformation an die Zwischeninstanz senden, ist es möglich, dass die Endbenutzerapplikation und die Benutzerapplikation beide jeweils die Verifizierungsantwort von der Zwischeninstanz empfangen.

Beispielsweise wird der zweite private Schlüssel von der zweiten Vorrichtung erzeugt oder der zweite private Schlüssel wird der zweiten Vorrichtung bereitgestellt. Insbesondere wird der zweite private Schlüssel von der zweiten Vorrichtung hinterlegt. Dass der zweite private Schlüssel auf der zweiten Vorrichtung hinterlegt ist, bedeutet, dass der zweite private Schlüssel auf einer Entität der zweiten Vorrichtung dauerhaft lokal gespeichert ist.

Beispielsweise ist die zweite Vorrichtung dazu ausgebildet, die zweite Identifikationsinformation zu erzeugen und an die Zwischeninstanz zu senden. Die zweite Identifikationsinformation wird beispielsweise in Abhängigkeit des zweiten privaten Schlüssels erzeugt. Zum Beispiel wird ein zweiter öffentlicher Schlüssel in Abhängigkeit des zweiten privaten Schlüssels erzeugt. Nachfolgend wird die zweite Identifikationsinformation in Abhängigkeit des zweiten öffentlichen Schlüssels erzeugt.

Die zweite Vorrichtung ist beispielsweise mit der Zwischeninstanz über das Netzwerk mit der Zwischeninstanz verbunden, wobei die zweite Identifikationsinformation insbesondere über das Netzwerk, insbesondere das WAN, gesendet wird.

Beispielsweise ist die Zwischeninstanz dazu ausgebildet, die erste Identifikationsinformation mit der zweiten Identifikationsinformation zu vergleichen und in Abhängigkeit des Vergleichs die Verifizierungsantwort zu erzeugen. Die erzeugte Verifizierungsantwort wird beispielsweise von der Zwischeninstanz an die Endbenutzerapplikation und/oder an die Benutzerapplikation über das Netzwerk gesendet. Die Verifizierungsantwort umfasst beispielsweise eine Information, ob die erste Identifikationsinformation gleich der zweiten Identifikationsinformation ist oder nicht. Durch die Abhängigkeit der jeweiligen Identifikationsinformation von dem jeweiligen privaten Schlüssel umfasst die Verifizierungsantwort beispielsweise eine Information, ob der erste private Schlüssel gleich dem zweiten privaten Schlüssel ist oder nicht.

Gemäß zumindest einer Ausführungsform des Verfahrens wird der erste private Schlüssel von der Endbenutzerapplikation oder der Benutzerapplikation in Abhängigkeit der Verifizierungsantwort verifiziert. Falls nur die Endbenutzerapplikation die Verifizierungsantwort empfängt, wird der erste private Schlüssel von der Endbenutzerapplikation verifiziert. Falls nur die Benutzerapplikation die Verifizierungsantwort empfängt, wird der erste private Schlüssel von der Benutzerapplikation verifiziert. Falls die Endbenutzerapplikation und die Benutzerapplikation beide jeweils die Verifizierungsantwort empfangen, ist es möglich, dass die Endbenutzerapplikation und die Benutzerapplikation beide jeweils den ersten privaten Schlüssel verifizieren.

Umfasst die Verifizierungsantwort beispielsweise die Information, dass die erste Identifikationsinformation gleich der zweiten Identifikationsinformation ist, wird der erste private Schlüssel verifiziert. Umfasst die Verifizierungsantwort beispielsweise die Information, dass die erste Identifikationsinformation nicht gleich der zweiten Identifikationsinformation ist, wird der erste private Schlüssel nicht verifiziert.

Das hier angegebene Verfahren ist insbesondere ein computerimplementiertes Verfahren.

Mit dem hier angegebenen Verfahren kann durch den Einsatz der Quantenschlüsselverteilung der gleiche private Schlüssel an mehreren Orten gleichzeitig, abhörsicher und quantensicher erzeugt werden - insbesondere an der ersten Vorrichtung und der zweiten Vorrichtung. Der erste private Schlüssel wird mit Vorteil durch die lokale Verbindung der Endbenutzerapplikation bereitgestellt. Dadurch entfällt die Notwendigkeit, dass ein privater Schlüssel nach der Erzeugung zur Verwahrung über einen unsicheren Kanal übertragen werden muss.

Insbesondere werden mit dem hier beschriebenen Verfahren sensible Informationen, umfassend den ersten privaten Schlüssel, nicht auf dem Postweg oder per Internet verteilt - die sicherere Verwahrung des zu dem ersten Schlüssel korrespondierenden zweiten privaten Schüssels vorteilhafterweise miteingeschlossen. Mit dem hier beschriebenen Verfahren wird insbesondere die Integrität des ersten privaten Schlüssels verifiziert. Der erste private Schlüssel kann nachfolgend mit Vorteil für Transaktionen eingesetzt werden, und es ist gleichzeitig durch die Verifizierung sichergestellt, dass der an die Endbenutzerapplikation übertragene erste private Schlüssel integer ist. Gleichzeitig ist sichergestellt, dass der verwendete erste private Schlüssel in Form des gleichen zweiten privaten Schlüssels auf der zweiten Vorrichtung gesichert ist.

Der Einsatz eines solchen Verfahrens kann mit Vorteil zu mehr Akzeptanz und Zukunftssicherheit rein digitaler Währungen führen, da eine quantensichere Infrastruktur bereitgestellt wird.

Gemäß zumindest einer Ausführungsform des Verfahrens wird eine Anfragenachricht von der Endbenutzerapplikation an die Benutzerapplikation gesendet. Beispielsweise wird nach einem Aufbau der lokalen Verbindung die Anfragenachricht von der Endbenutzerapplikation an die Benutzerapplikation gesendet. Die Anfragenachricht ist beispielsweise charakteristisch für eine Information, dass die Endbenutzerapplikation den ersten privaten Schlüssel benötigt.

Beispielsweise kann die Anfragenachricht aktiv von einem Benutzer der Endbenutzerapplikation gesendet werden. Alternativ kann die Anfragenachricht charakteristisch sein für eine erfolgreich Aufgebaute lokale Verbindung. Alternativ oder zusätzlich ist es möglich, dass die Anfragenachricht direkt von der Benutzerapplikation bereitgestellt wird.

Gemäß zumindest einer Ausführungsform des Verfahrens wird der erste private Schlüssel der Endbenutzerapplikation in Abhängigkeit der Anfragenachricht bereitgestellt. Beispielsweise wird die lokale Verbindung nach dem Empfang des privaten Schlüssels von der Endbenutzerapplikation terminiert.

Beispielsweise wird der erste private Schlüssel nach Empfang der Anfragenachricht von der ersten Vorrichtung und insbesondere der zweite private Schlüssel von der zweiten Vorrichtung zusammen erzeugt. Das heißt, dass der erste private Schlüssel, und insbesondere der zweite private Schlüssel, auf Anfrage mittels der Anfragenachricht erzeugt werden, anstatt im Voraus erzeugt zu werden oder vorrätig gespeichert zu sein. Der erzeugte erste private Schlüssel wird nachfolgend der Endbenutzerapplikation bereitgestellt.

Mit Vorteil werden der erste und zweite private Schlüssel nur erzeugt, wenn diese wirklich benötigt werden. Dies reduziert vorteilhafterweise ein Risiko, dass der erste und zweite private Schlüssel gestohlen oder kompromittiert werden, bevor diese verwendet werden. Weiterhin können damit mit Vorteil Speicherressourcen geschont werden.

Alternativ wird der erste private Schlüssel nach Empfang der Anfragenachricht von einem ersten Speicher der ersten Vorrichtung bereitgestellt und insbesondere wird der zweite private Schlüssel von einem zweiten Speicher der zweiten Vorrichtung bereitgestellt. Beispielsweise werden eine Vielzahl von ersten privaten Schlüsseln und eine Vielzahl von zweiten privaten Schlüsseln, die jeweils zu der Vielzahl von ersten privaten Schlüsseln korrespondieren, zusammen quantensicher mittels Quantenschlüsselverteilung im Voraus erzeugt und in dem ersten Speicher und dem zweiten Speicher gespeichert. Das heißt, dass der erste private Schlüssel, und insbesondere der zweite private Schlüssel, auf Anfrage mittels der Anfragenachricht aus dem ersten Speicher, und insbesondere dem zweiten Speicher, bereitgestellt werden, anstatt auf die Anfrage direkt erzeugt zu werden. Der bereitgestellte erste private Schlüssel wird nachfolgend der Endbenutzerapplikation bereitgestellt. Der zu dem bereitgestellten ersten privaten Schlüssel korrespondierende zweite private Schlüssel wird auf der zweiten Vorrichtung hinterlegt.

Mit Vorteil sind der erste und zweite private Schlüssel bereits auf der ersten und zweiten Vorrichtung gespeichert, wodurch ein sofortiger Zugriff auf den ersten und zweiten privaten Schlüssel erfolgen kann. Derartige im Voraus erzeugte erste und zweite private Schlüssel können vorteilhafterweise für automatisierte Prozesse und/oder für die schnelle Bereitstellung in einem großen System verwendet werden.

Gemäß zumindest einer Ausführungsform des Verfahrens wird die Endbenutzerapplikation auf einer Endvorrichtung ausgeführt. Beispielsweise ist die Endvorrichtung einem Benutzer zugeordnet, insbesondere genau einem Benutzer oder mehreren Benutzern. Insbesondere ist jede Endbenutzerapplikation einem einzelnen Benutzer eineindeutig zugeordnet. Es ist möglich, dass eine Endvorrichtung mehrere Endbenutzerapplikationen umfasst, wobei jede einzelne Endbenutzerapplikation eineindeutig ausschließlich einem der mehreren Benutzern zugeordnet ist.

Beispielsweise wird der erste private Schlüssel nach dem Bereitstellen dauerhaft auf der Endvorrichtung, insbesondere der Endbenutzerapplikation, gespeichert.

Die Endvorrichtung ist beispielsweise zumindest eines der folgenden Vorrichtungen des Benutzers: ein mobiles Endgerät, wie zum Beispiel ein Mobiltelefon oder ein Tablet, eine mobile Speichervorrichtung wie zum Beispiel ein USB-Gerät, eine Smartcard. Insbesondere ist die Endbenutzerapplikation auf der Endvorrichtung gespeichert.

Handelt es sich bei der Endvorrichtung zum Beispiel um das mobile Endgerät, umfasst die Endbenutzerapplikation beispielsweise eine graphische Benutzeroberfläche. Dem Benutzer kann mittels der graphischen Benutzeroberfläche die Verifizierung des ersten privaten Schlüssels graphisch mitgeteilt werden. Beispielsweise kann der Benutzer, wenn die lokale Verbindung aufgebaut ist, die Anfragenachricht in Abhängigkeit einer Benutzeraktion über die graphische Benutzeroberfläche senden.

Handelt es sich bei der Endvorrichtung zum Beispiel um die mobile Speichervorrichtung oder die Smartcard, kann die Endvorrichtung mit einer elektronischen Vorrichtung des Benutzers, wie zum Beispiel einem Computer, einem Kartenlesegerät oder einem mobilen Endgerät, nach dem Bereitstellen des ersten privaten Schlüssels verbunden werden, insbesondere über eine Verbindung, die insbesondere charakteristisch für eine weitere Punkt-zu-Punkt Verbindung ist. In diesem Fall umfasst die Endbenutzerapplikation beispielsweise Instruktionen, die die elektronische Vorrichtung dazu veranlassen die Endbenutzerapplikation auf der elektronischen Vorrichtung auszuführen. Dem Benutzer kann mittels einer graphischen Benutzeroberfläche der elektronischen Vorrichtung die Verifizierung des ersten privaten Schlüssels graphisch mitgeteilt werden. Beispielsweise kann der Benutzer, wenn die weitere Punkt-zu-Punkt Verbindung aufgebaut ist, die Anfragenachricht über die graphische Benutzeroberfläche der elektronischen Vorrichtung senden oder die Anfragenachricht wird automatisch gesendet, wenn die weitere Punkt-zu-Punkt Verbindung aufgebaut ist.

Gemäß zumindest einer Ausführungsform des Verfahrens wird die Benutzerapplikation auf der ersten Vorrichtung ausgeführt. Die Benutzerapplikation umfasst beispielsweise die graphische Benutzeroberfläche. Für den Fall, dass die Endvorrichtung beispielsweise die mobile Speichervorrichtung oder die Smartcard ist, kann das Verfahren über eine graphische Benutzeroberfläche der Benutzerapplikation gestartet werden.

Beispielsweise kann der Benutzer, wenn die lokale Verbindung aufgebaut ist, die Anfragenachricht über die graphische Benutzeroberfläche der ersten Vorrichtung senden.

Beispielsweise wird dem Benutzer mittels der graphischen Benutzeroberfläche die Verifizierung des ersten privaten Schlüssels graphisch mitgeteilt.

Gemäß zumindest einer Ausführungsform des Verfahrens werden der ersten Vorrichtung und der zweiten Vorrichtung jeweils Photonen jeweils eines verschränkten Photonenpaares bereitgestellt. Die Photonen werden beispielsweise von einem Emitter erzeugt und von einer ersten Empfängervorrichtung und von einer zweiten Empfängervorrichtung empfangen. Die erste Empfängervorrichtung ist der ersten Vorrichtung zugeordnet, insbesondere ist die erste Empfängervorrichtung Teil der ersten Vorrichtung oder mit der ersten Vorrichtung verbunden. Die zweite Empfängervorrichtung ist der zweiten Vorrichtung zugeordnet, insbesondere ist die zweite Empfängervorrichtung Teil der zweiten Vorrichtung oder mit der zweiten Vorrichtung verbunden. Der Emitter ist in dieser Ausführungsform keiner der ersten und zweiten Vorrichtungen zugeordnet und ist nicht Teil einer der ersten und zweiten Vorrichtung.

Die Empfängervorrichtungen können jeweils Teil einer Quantenschlüsselverteilungsbox sein, die jeweils einer der Vorrichtungen zugeordnet sind. Die Quantenschlüsselverteilungsboxen sind jeweils mit einem Quantenschlüsselverteilungsendknoten verbunden, die jeweils Teil der jeweiligen Vorrichtungen sind.

Gemäß zumindest einer Ausführungsform des Verfahrens werden Photonen mit jeweils einem vorgegebenen Zustand von der ersten Vorrichtung an die zweite Vorrichtung oder von der zweiten Vorrichtung an die erste Vorrichtung bereitgestellt. Der Emitter ist in dieser Ausführungsform der ersten Vorrichtung oder der zweiten Vorrichtung zugeordnet. Der Emitter kann Teil der ersten Vorrichtung sein oder mit der ersten Vorrichtung verbunden sein, wenn die Photonen von der ersten Vorrichtung an die zweite Vorrichtung bereitgestellt werden. Der Emitter kann Teil der zweiten Vorrichtung sein oder mit der zweiten Vorrichtung verbunden sein, wenn die Photonen von der zweiten Vorrichtung an die erste Vorrichtung bereitgestellt werden.

Die Empfängervorrichtung und der Emitter können jeweils Teil der Quantenschlüsselverteilungsbox sein, die jeweils einer der Vorrichtungen zugeordnet sind. Die Quantenschlüsselverteilungsboxen sind jeweils mit den Quantenschlüsselverteilungsendknoten verbunden, die jeweils Teil der jeweiligen Vorrichtungen sind.

Gemäß zumindest einer Ausführungsform des Verfahrens werden Photonen mit jeweils einem vorgegebenen Zustand von der ersten Vorrichtung und der zweiten Vorrichtung an ein Relais bereitgestellt. Ein erster Emitter ist in dieser Ausführungsform der ersten Vorrichtung zugeordnet und ein zweiter Emitter der zweiten Vorrichtung. Der erste Emitter kann Teil der ersten Vorrichtung sein oder mit der ersten Vorrichtung verbunden sein. Der zweite Emitter kann Teil der zweiten Vorrichtung sein oder mit der zweiten Vorrichtung verbunden sein. Das Relais ist in dieser Ausführungsform keiner der ersten und zweiten Vorrichtungen zugeordnet und ist nicht Teil einer der ersten und zweiten Vorrichtung. In dieser Ausführungsform umfasst das Relais eine Empfängervorrichtung zum Empfangen der emittierten Photonen.

Die Emitter können jeweils Teil der Quantenschlüsselverteilungsbox sein, die jeweils einer der Vorrichtungen zugeordnet sind. Die Quantenschlüsselverteilungsboxen sind jeweils mit den Quantenschlüsselverteilungsendknoten verbunden, die jeweils Teil der jeweiligen Vorrichtungen sind.

Gemäß zumindest einer Ausführungsform des Verfahrens, werden der erste private Schlüssel von der ersten Vorrichtung und der zweite private Schlüssel von der zweiten Vorrichtung jeweils in Abhängigkeit der Photonen erzeugt. Die so erzeugten ersten und zweiten privaten Schlüssel sind mit Vorteil gleich zueinander und quantensicher.

Gemäß zumindest einer Ausführungsform des Verfahrens ist der erste private Schlüssel repräsentativ für einen einzelnen durch die Quantenschlüsselverteilung erzeugten ersten Schlüssel, und der zweite private Schlüssel ist repräsentativ für einen einzelnen durch die Quantenschlüsselverteilung erzeugten zweiten Schlüssel. Bei dem erzeugten ersten und zweiten Schlüssel handelt es sich beispielsweise um Rohschlüssel, die mittels weiterer Verarbeitungsschritte zu dem ersten und zweiten privaten Schlüssel verarbeitet werden. Die Verarbeitungsschritte umfassen beispielsweise einen Fehlerkorrekturschritt und/oder einen Hash-Schritt.

Beispielsweise wird der erste private Schlüssel durch die Quantenschlüsselverteilung erzeugt und der ersten Vorrichtung bereitgestellt und insbesondere wird der zweite private Schlüssel durch die Quantenschlüsselverteilung erzeugt und der zweiten Vorrichtung bereitgestellt.

Gemäß zumindest einer Ausführungsform des Verfahrens ist der erste private Schlüssel und der zweite private Schlüssel jeweils repräsentativ für eine Verknüpfung eines ersten Sub-Schlüssels und eines zweiten Sub-Schlüssels, wobei der erste Sub-Schlüssel durch die Quantenschlüsselverteilung der ersten Vorrichtung bereitgestellt ist, und der zweite Sub-Schlüssel durch die Quantenschlüsselverteilung der zweiten Vorrichtung bereitgestellt ist. Beispielsweise wird zumindest ein erster Sub-Schlüssel der ersten Vorrichtung bereitgestellt und insbesondere zumindest ein zweiter Sub-Schlüssel wird der zweiten Vorrichtung bereitgestellt. Der erste private Schlüssel kann in Abhängigkeit des ersten Sub-Schlüssels und des zweiten Sub-Schlüssels erzeugt werden, und insbesondere kann der zweite private Schlüssel in Abhängigkeit des ersten Sub-Schlüssels und des zweiten Sub-Schlüssels erzeugt werden. Beispielsweise werden der erste Sub-Schlüssels und der zweite Sub-Schlüssel durch eine mathematische Operation miteinander verknüpft, insbesondere durch die Verknüpfung, zur Erzeugung des ersten privaten Schlüssels für die erste Vorrichtung und des zweiten privaten Schlüssels für die zweite Vorrichtung.

Die mathematische Operation ist beispielsweise charakteristisch für zumindest eine der folgenden Operationen: eine XOR-Operation, eine Verkettungs-Operation, eine Modulo-Operation, eine Hash-Operation. Vorteilhafterweise kann mit der Verknüpfung die Sicherheit und Integrität der resultierenden privaten Schlüssel verbessert werden, insbesondere wenn die Sub-Schlüssel über ein oder mehrere Relais, insbesondere ein Relais-Netzwerk, bereitgestellt werden.

Gemäß zumindest einer Ausführungsform des Verfahrens wird der erste private Schlüssel der Endbenutzerapplikation in einer gesicherten Umgebung von der ersten Vorrichtung bereitgestellt. Beispielsweise ist die lokale Verbindung auf die gesicherte Umgebung beschränkt. Insbesondere ist die lokale Verbindung in der gesicherten Umgebung auf einen vorgegebenen geografischen Bereich beschränkt, wie zum Beispiel ein einzelner gesicherter Raum. Der gesicherte Raum befindet sich beispielsweise in einer Bank.

Der Datenverkehr zwischen der Endbenutzerapplikation und der Benutzerapplikation findet ausschließlich in der gesicherten Umgebung statt. Durch Beschränkung der lokalen Verbindung auf die gesicherte Umgebung findet die Übertragung des ersten privaten Schlüssels mit Vorteil in einem kontrollierten Umfeld statt, und beispielsweise Man-in-the-Middle-Angriffe sind schwieriger durchzuführen. Durch Verwendung der lokalen Verbindung in der gesicherten Umgebung, wird mit Vorteil eine physische und logische Kontrolle über den Zugang zu der ersten Vorrichtung bereitgestellt.

Gemäß zumindest einer Ausführungsform des Verfahrens wird der zweite private Schlüssel in einem Hardware-Sicherheitsmodul der zweiten Vorrichtung hinterlegt. Insbesondere ist die Entität der zweiten Vorrichtung, auf der der zweite private Schlüssel dauerhaft auf der zweiten Vorrichtung gespeichert ist, das Hardware-Sicherheitsmodul.

Wird der zweite private Schlüssel mit dem ersten privaten Schlüssel in Abhängigkeit der Anfrage erzeugt, wird der zweite private Schlüssel auf dem Hardware-Sicherheitsmodul gespeichert.

Wird der zweite private Schlüssel mit dem ersten privaten Schlüssel im Voraus erzeugt und ist im zweiten Speicher gespeichert, wird der zweite private Schlüssel in Abhängigkeit der Anfrage im Hardware-Sicherheitsmodul gespeichert.

Gemäß zumindest einer Ausführungsform des Verfahrens wird ein erstes digitales Wallet in Abhängigkeit des ersten privaten Schlüssels erzeugt. Beispielsweise wird zur Erzeugung des ersten digitalen Wallets der erste öffentliche Schlüssel in Abhängigkeit des ersten privaten Schlüssels erzeugt. Nachfolgend wird eine erste Wallet-Adresse in Abhängigkeit des ersten öffentlichen Schlüssels erzeugt.

Beispielsweise ist das erste digitale Wallet und der erste private Schlüssel dauerhaft auf der Endvorrichtung gespeichert.

Mit Vorteil kann das erste digitale Wallet von dem Benutzer der Endbenutzerapplikation zur Verwaltung, Speicherung und/oder Nutzung von Kryptowährungen und/oder digitalen Assets verwendet werden.

Beispielsweise wird das erste digitale Wallet mittels des ersten privaten Schlüssels durch die Endbenutzerapplikation erzeugt. Alternativ oder zusätzlich kann das erste digitale Wallet mittels des ersten privaten Schlüssels durch die Benutzerapplikation erzeugt werden.

Gemäß zumindest einer Ausführungsform des Verfahrens ist die erste Identifikationsinformation charakteristisch für zumindest einen Parameter des ersten digitalen Wallets. Der zumindest eine Parameter des ersten digitalen Wallets ist beispielsweise die erste Wallet Adresse. Die erste Wallet Adresse ist beispielsweise eine erste Ethereum-Wallet-Adresse.

Gemäß zumindest einer Ausführungsform des Verfahrens wird ein zweites digitales Wallet in Abhängigkeit des zweiten privaten Schlüssels erzeugt. Beispielsweise wird zur Erzeugung des zweiten digitalen Wallets der zweite öffentliche Schlüssel in Abhängigkeit des zweiten privaten Schlüssels erzeugt. Nachfolgend wird eine zweite Wallet Adresse in Abhängigkeit des zweiten öffentlichen Schlüssels erzeugt. Beispielsweise wird das zweite digitale Wallet mittels des zweiten privaten Schlüssels durch eine Applikation der zweiten Vorrichtung erzeugt.

Mit Vorteil kann das zweite digitale Wallet von der zweiten Vorrichtung sicher verwahrt werden.

Gemäß zumindest einer Ausführungsform des Verfahrens ist die zweite Identifikationsinformation charakteristisch für zumindest einen Parameter des zweiten digitalen Wallets. Der zumindest eine Parameter des zweiten digitalen Wallets ist beispielsweise die zweite Wallet Adresse. Die zweite Wallet Adresse ist beispielsweise eine zweite Ethereum-Wallet-Adresse.

Gemäß zumindest einer Ausführungsform des Verfahrens ist die Zwischeninstanz Teil einer Blockchain, der die zweite Identifikationsinformation von der zweiten Vorrichtung bereitgestellt wird. Insbesondere wird die erste Identifikationsinformation von der Endbenutzerapplikation oder der Benutzerapplikation an die Zwischeninstanz bereitgestellt und die zweite Identifikationsinformation wird von der Applikation der zweiten Vorrichtung an die Zwischeninstanz bereitgestellt.

Wird beispielsweise der erste private Schlüssel der Endbenutzerapplikation bereitgestellt, wird die zweite Identifikationsinformation von der zweiten Vorrichtung erzeugt und der Zwischeninstanz bereitgestellt. Das Senden der ersten Identifikationsinformation zu der Zwischeninstanz kann zu einem späteren Zeitpunkt erfolgen, der beispielsweise von dem Benutzer vorgegeben wird.

Durch Verwendung der Blockchain ist mit Vorteil keine zentrale Autorität nötig. Insbesondere ist eine Transaktion, die charakteristisch ist für die Erzeugung der Verifizierungsantwort, mit Vorteil sicher, da diese Transaktion gemeinsam durch eine Vielzahl von Teilnehmen der Blockchain validiert wird. Mit Vorteil ist damit eine Möglichkeit von Datenmanipulation der involvierten Daten reduziert.

Gemäß zumindest einer Ausführungsform des Verfahrens führt die Zwischeninstanz die Abfrage automatisch durch. Insbesondere wird der Abgleich der ersten Identifikationsinformation und der zweiten Identifikationsinformation automatisch durchgeführt und nachfolgend die Verifizierungsantwort erzeugt und versendet.

Die Zwischeninstanz umfasst beispielsweise ein selbstausführendes Element, dem die erste Identifikationsinformation und die zweite Identifikationsinformation bereitgestellt werden. Das selbstausführende Element ist beispielsweise ein Smart Contract.

Durch Verwendung des Smart Contracts auf der Blockchain kann die Verifizierung mit Vorteil automatisiert und effizient durchgeführt werden.

Gemäß zumindest einer Ausführungsform des Verfahrens wird ein weiterer erster privater Schlüssels an eine weitere Endbenutzerapplikation von einer weiteren Benutzerapplikation einer weiteren ersten Vorrichtung über eine weitere lokale Verbindung bereitgestellt. Die Bereitstellung entspricht analog der Bereitstellung des ersten privaten Schlüssels an die Endbenutzerapplikation. Die Merkmale sind damit auch für die Bereitstellung des weiteren ersten privaten Schlüssels an die weitere Endbenutzerapplikation offenbart.

Gemäß dieser Ausführungsform kann die weitere Endbenutzerapplikation auf der Endvorrichtung oder einer weiteren Endvorrichtung ausgeführt werden. Gemäß dieser Ausführungsform kann ein weiterer Benutzer mit der weiteren Endbenutzerapplikation den weiteren ersten Schlüssel von der weiteren ersten Vorrichtung erhalten, insbesondere zur Erzeugung eines weiteren ersten digitalen Wallets, welches mit Vorteil verifiziert werden kann. Insbesondere kann die weitere Vorrichtung an einem anderen geographischen Ort sein als die erste Vorrichtung.

Alternativ oder zusätzlich kann der weitere erste private Schlüssel an eine weitere Endbenutzerapplikation von der Benutzerapplikation der ersten Vorrichtung bereitgestellt werden. In diesem Fall kann ein weiterer Benutzer mit der weiteren Endbenutzerapplikation den ersten Schlüssel erhalten.

Das Bereitstellen kann entsprechend auf eine Vielzahl von weiteren Benutzern und/oder weiteren ersten Vorrichtungen skaliert werden.

Wird der weitere erste private Schlüssel an die weitere Endbenutzerapplikation von der weiteren Benutzerapplikation der weiteren ersten Vorrichtung über die weitere lokale Verbindung bereitgestellt, sind der erste private Schlüssel und der weitere erste private Schlüssel insbesondere verschieden voneinander. Der bereitgestellte erste Schlüssel und zweite private Schlüssel sind insbesondere verschieden von dem bereitgestellten weiteren ersten Schlüssel und weiteren zweiten Schlüssel.

Der erste private Schlüssel ist insbesondere verschieden von dem weiteren ersten privaten Schlüssel, da der erste private Schlüssel auf Anfrage mittels der Anfragenachricht erzeugt wird und der weitere erste private Schlüssel auf Anfrage mittels einer weiteren Anfragenachricht erzeugt wird. Da die entsprechenden Schlüssel mittels Quantenschlüsselverteilung erzeugt sind, sind diese inhärent verschieden voneinander.

Alternativ werden eine Vielzahl von weiteren ersten privaten Schlüsseln und eine Vielzahl von weitern zweiten privaten Schlüsseln zusammen quantensicher mittels Quantenschlüsselverteilung im Voraus erzeugt und in einem weiteren ersten Speicher der weiteren ersten Vorrichtung und dem zweiten Speicher der zweiten Vorrichtung gespeichert. Die Vielzahl von ersten privaten Schlüsseln im ersten Speicher und die Vielzahl von weiteren ersten privaten Schlüsseln im weiteren ersten Speicher sind insbesondere alle verschieden voneinander.

Gemäß zumindest einer Ausführungsform des Verfahrens wird eine weitere erste Identifikationsinformation von der weiteren Endbenutzerapplikation oder der weiteren Benutzerapplikation an die Zwischeninstanz gesendet, wobei die weitere erste Identifikationsinformation charakteristisch für den weiteren ersten privaten Schlüssel ist. Das Senden der weiteren ersten Identifikationsinformation entspricht analog dem Senden der ersten Identifikationsinformation an die Zwischeninstanz, sodass die betreffenden Merkmale entsprechend offenbart sind.

Das Senden kann entsprechend auf eine Vielzahl von weiteren Benutzern und/oder weiteren ersten Vorrichtungen skaliert werden.

Gemäß zumindest einer Ausführungsform des Verfahrens wird eine weitere Verifizierungsantwort von der weiteren Endbenutzerapplikation oder der weiteren Benutzerapplikation von der Zwischeninstanz empfangen, wobei die weitere Verifizierungsantwort charakteristisch ist für einen Abgleich der weiteren ersten Identifikationsinformation und einer weiteren zweiten Identifikationsinformation, wobei die weitere zweite Identifikationsinformation charakteristisch ist für einen weiteren zweiten privaten Schlüssel, der auf der zweiten Vorrichtung hinterlegt ist.

Das Empfangen der weiteren Verifizierungsantwort entspricht analog dem Empfangen der Verifizierungsantwort von der weiteren Endbenutzerapplikation oder der weiteren Benutzerapplikation, sodass die betreffenden Merkmale entsprechend offenbart sind.

Das Empfangen kann entsprechend auf eine Vielzahl von weiteren Benutzern und/oder weiteren ersten Vorrichtungen skaliert werden.

Gemäß zumindest einer Ausführungsform des Verfahrens wird der weitere erste private Schlüssel von der weiteren Endbenutzerapplikation oder der weiteren Benutzerapplikation in Abhängigkeit der weiteren Verifizierungsantwort verifiziert. Das Verifizieren des weiteren ersten privaten Schlüssels entspricht analog dem Verifizieren des ersten privaten Schlüssels, sodass die betreffenden Merkmale entsprechend offenbart sind.

Das Verifizieren kann entsprechend auf eine Vielzahl von weiteren Benutzern und/oder weiteren ersten Vorrichtungen skaliert werden.

Mit Vorteil ist das Verfahren skalierbar. Damit kann einer Vielzahl von Benutzern jeweils ein erster privater Schlüssel bereitgestellt werden, der insbesondere auch auf der zweiten Vorrichtung sicher verwahrt wird. Weiterhin kann jeder der Vielzahl von Benutzern den bereitgestellten ersten privaten Schlüssel verifizieren.

Des Weiteren wird eine Endvorrichtung angegeben. Die Endvorrichtung ist dazu ausgebildet, das hier beschriebene Verfahren auszuführen. Sämtliche in Verbindung mit dem Verfahren offenbarten Merkmale der Ausführungsform sind daher auch in Verbindung mit der Vorrichtung offenbart und umgekehrt.

Des Weiteren wird ein System angegeben. Das System umfasst insbesondere die Endvorrichtung und ist damit dazu ausgebildet, das hier beschriebene Verfahren auszuführen. Sämtliche in Verbindung mit dem Verfahren oder der Endvorrichtung offenbarten Merkmale der Ausführungsform sind daher auch in Verbindung mit dem System offenbart und umgekehrt.

Gemäß zumindest einer Ausführungsform umfasst das System eine erste Vorrichtung. Die erste Vorrichtung ist beispielsweise ein Benutzer-Terminal.

Gemäß zumindest einer Ausführungsform umfasst das System eine zweite Vorrichtung, die mit der ersten Vorrichtung verbunden ist. Die zweite Vorrichtung ist beispielsweise Teil eines zentralen Rechenzentrums.

Umfasst das System die erste Vorrichtung und die weitere erste Vorrichtung, insbesondere eine Vielzahl weiterer erster Vorrichtungen, sind die erste Vorrichtung und die weitere erste Vorrichtung, insbesondere eine Vielzahl weiterer erster Vorrichtungen, mit dem zentralen Rechenzentrum verbunden.

Gemäß zumindest einer Ausführungsform des Systems ist die Endvorrichtung bei der Bereitstellung des ersten privaten Schlüssels temporär mit der ersten Vorrichtung verbunden.

Gemäß zumindest einer Ausführungsform des Systems sind die erste Vorrichtung und die zweite Vorrichtung über einen Quantenlink und ein Netzwerklink miteinander verbunden. Der Quantenlink umfasst beispielsweise eine Sattelitenverbindung und/oder eine Glasfaserverbindung, über die die Photonen übermittelt werden können. Der Netzwerklink ist Teil des Netzwerks, insbesondere des WANs.

Die aufgeführten Ausführungsformen des hier beschriebenen Verfahrens, der Endvorrichtung, und dem System können miteinander kombiniert werden, auch wenn die explizite Kombination nicht explizit beschrieben ist.

Zudem wird ein Computerprogramm angegeben, umfassend Befehle, die bei der Ausführung des Computerprogramms durch einen Computer diesen veranlassen, das hier beschriebene Verfahren auszuführen.

Weiterhin wird ein computerlesbares Speichermedium angegeben, auf dem das hier beschriebene Computerprogramm gespeichert ist.

Im Folgenden werden das hier beschriebene Verfahren, die Endvorrichtung, und das System zur Verifizierung eines ersten privaten Schlüssels, der zusammen mit einem zweiten privaten Schlüssel quantensicher mittels Quantenschlüsselverteilung erzeugt ist, anhand von Ausführungsbeispielen und den zugehörigen Figuren näher erläutert.

Es zeigen:
Figur 1 ein Ablaufdiagramm des Verfahrens gemäß einem Ausführungsbeispiel, und
Figur 2 eine schematische Darstellung des Systems für das Verfahren gemäß einem Ausführungsbeispiel.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

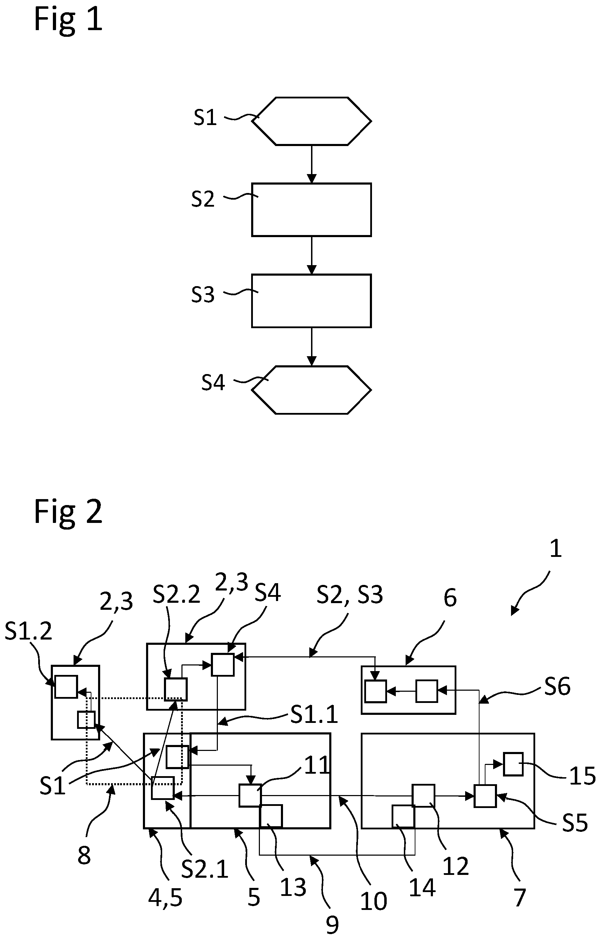

In dem Ablaufdiagramm des Verfahrens gemäß dem Ausführungsbeispiel der Figur 1 wird im Schritt S1 ein erster privater Schlüssel an eine Endbenutzerapplikation 2 von einer Benutzerapplikation 4 einer ersten Vorrichtung 5 über eine lokale Verbindung 8 bereitgestellt. Endbenutzerapplikation 2 wird beispielsweise auf einer Endvorrichtung 3 ausgeführt, wobei die Endvorrichtung 3 und die erste Vorrichtung 5 in Verbindung mit Figur 2 näher beschrieben sind.

Nachfolgend wird im Schritt S2 eine erste Identifikationsinformation von der Endbenutzerapplikation 2 oder der Benutzerapplikation 4 an eine Zwischeninstanz gesendet, wobei die erste Identifikationsinformation charakteristisch für den ersten privaten Schlüssel ist.

Im Schritt S3 wird nachfolgend zu Schritt S2 eine Verifizierungsantwort von der Endbenutzerapplikation 2 oder der Benutzerapplikation 4 empfangen, wobei die Verifizierungsantwort von der Zwischeninstanz gesendet wird, wobei die Verifizierungsantwort charakteristisch ist für einen Abgleich der ersten Identifikationsinformation und einer zweiten Identifikationsinformation, wobei die zweite Identifikationsinformation charakteristisch ist für den zweiten privaten Schlüssel, der auf einer zweiten Vorrichtung 7 hinterlegt ist.

Nachfolgend wird der erste private Schlüssel im Schritt S4 von der Endbenutzerapplikation 2 oder der Benutzerapplikation 4 in Abhängigkeit der Verifizierungsantwort verifiziert.

Im System 1 gemäß dem Ausführungsbeispiel der Figur 2 sind die Verfahrensschritte S1, S2, S3 und S4 gemäß der Figur 1 gekennzeichnet. Die Endbenutzerapplikation 2 der Endvorrichtung 3 kann mehrere Applikationslagen umfassen, wobei in Figur 2 zwei Applikationslagen dargestellt sind. Die Endbenutzerapplikation 2 ist dazu ausgebildet in einem Teilschritt S1.1, der vom Schritt S1 umfasst ist, eine Anfragenachricht von der Endbenutzerapplikation 2 an die Benutzerapplikation 4 zu senden. Die vom Teilschritt S1.1 verbundenen Elemente in Figur 2 können eine Sendeeinheit der Endbenutzerapplikation 2 und eine Empfangseinheit der Benutzerapplikation 4 sein. Die Anfragenachricht wird beispielsweise gesendet, wenn der Benutzer der Endbenutzerapplikation 2 eine Erzeugung eines ersten digitalen Wallets anfordert, insbesondere über eine graphische Benutzeroberfläche. Die Anfragenachricht wird dann insbesondere gesendet, wenn die lokale Verbindung 8 hergestellt ist.

Nachfolgend wird der erste private Schlüssel der Endbenutzerapplikation 2 in Abhängigkeit der Anfragenachricht bereitgestellt. Ein erster Quantenschlüsselverteilungsendknoten 11 der ersten Vorrichtung 5, der beispielsweise mit einer ersten Quantenschlüsselverteilungsbox 13 verbunden ist, ist insbesondere zur Erzeugung des ersten privaten Schlüssels ausgebildet.

Im Teilschritt S2.1, der vom Schritt S2 umfasst ist, können nachfolgend Parameter eines ersten digitalen Wallets in Abhängigkeit des ersten privaten Schlüssels erzeugt werden. Die Parameter des ersten digitalen Wallets können weiterhin über die lokale Verbindung 8 an die Endbenutzerapplikation 2 gesendet werden. Im Teilschritt S2.2, der vom Schritt S2 umfasst ist, kann die Endbenutzerapplikation 2 das erste digitale Wallet in Abhängigkeit des Parameters, und damit auch in Abhängigkeit des ersten privaten Schlüssels, erzeugen. Zumindest ein Parameter des ersten Wallets ist charakteristisch für die erste Identifikationsinformation, die an die Zwischeninstanz 6 gesendet wird. Weiterhin wird der erste private Schlüssel im Teilschritt S1.2, der vom Schritt S1 umfasst ist, über die lokale Verbindung 8 an die Endbenutzerapplikation 2 gesendet. Der erste private Schlüssel wird insbesondere dauerhaft von der Endbenutzerapplikation 2 auf der Endvorrichtung 3 gespeichert.

Die erste Vorrichtung 5 und die zweite Vorrichtung 7 sind über einen Quantenlink 9 und ein Netzwerklink 10 miteinander verbunden. Der zweite private Schlüssel wird auf der zweiten Vorrichtung 7 insbesondere quantensicher mittels Quantenschlüsselverteilung erzeugt, wenn der erste private Schlüssel auf der ersten Vorrichtung 5 erzeugt wird. Ein zweiter Quantenschlüsselverteilungsendknoten 12 der zweiten Vorrichtung 7, der beispielsweise mit einer zweiten Quantenschlüsselverteilungsbox 14 verbunden ist, ist insbesondere zur Erzeugung des zweiten privaten Schlüssels ausgebildet. In einem weiteren Schritt S5, können nachfolgend Parameter eines zweiten digitalen Wallets in Abhängigkeit des zweiten privaten Schlüssels erzeugt werden. Die Parameter des zweiten digitalen Wallets, insbesondere der zweite private Schlüssel, werden auf einem Hardware-Sicherheitsmodul 15 der zweiten Vorrichtung 7 hinterlegt. Zumindest ein Parameter des zweiten Wallets ist charakteristisch für die zweite Identifikationsinformation, die im weiteren Schritt S6 an die Zwischeninstanz 6 gesendet wird.

Damit wird die Quantenschlüsselverteilung zum Generieren des privaten Schlüssels - also dem ersten privaten Schlüssel, der gleich dem zweiten privaten Schlüssels ist, wenn diese integer erzeugt sind - vorteilhafterweise verwendet. Der erste private Schlüssel und der zweite private Schlüssel werden zum Beispiel durch Verschränkung von Photonen an mehreren Orten generiert, also am Ort der ersten Vorrichtung 5 und am Ort der zweiten Vorrichtung 7 und insbesondere nicht über ein WAN übertragen.

Im Szenario von digitalen Währungen startet der Benutzer an der ersten Vorrichtung 5, die einem Benutzerterminal entspricht, eine Erzeugung des ersten digitalen Wallets, in Form einer Anfrage des ersten privaten Schlüssels. Beim Start des Verfahrens wird beispielsweise am Ort der ersten Vorrichtung 5 und am Ort der zweiten Vorrichtung 7 ein jeweils ein identischer privater Schlüssel, nämlich der erste und der zweite private Schlüssel, erzeugt. Die zweite Vorrichtung 7 entspricht weiterhin einem Ort der Verwahrung, der insbesondere Teil eines Rechenzentrums ist.

Der Benutzer kann den ersten privaten Schlüssel nach erfolgreicher Erzeugung auf der Endvorrichtung 3, zum Beispiel auf ein Mobiltelefon oder auf ein Hardwarewallet, mittels NFC übertragen und speichern. Zusätzlich wird der zweite private Schlüssel in dem Hardware-Sicherheitsmodul 15 der zweiten Vorrichtung 7 gespeichert, also sicher verwahrt.

Aus dem ersten und dem zweiten privaten Schlüssel kann ein öffentlicher Schlüssel abgeleitet werden und weiterhin die erste und zweite Identifikationsinformation. Die zweite Identifikationsinformation kann auf der Zwischeninstanz 6 auf einem Smart Contract referenziert werden. Der Benutzer kann damit mit Vorteil verifizieren, dass der erste private Schlüssel korrekt erzeugt und verwahrt ist.

Die erste Vorrichtung 5 und die zweite Vorrichtung 7 sind insbesondere durch einen Quantenlink 9, beispielsweise realisiert über Glasfaser oder Satellit, miteinander verbunden um das Quantenschlüsselverteilungssystem zur Erzeugung des ersten und des zweiten Schlüssels zu implementieren. Zusätzlich sind die erste Vorrichtung 5 und die zweite Vorrichtung 7 über das Netzwerk, zum Beispiel dem WAN, verbunden, um Steuerinformationen zu übertragen. Über das Netzwerk werden keine schützenswerten Informationen geteilt, das heißt dieser Kanal kann auch über das öffentliche Internet implementiert werden. Weiterhin kann die Kommunikation der Endvorrichtung 3 mit der Zwischeninstanz 6 und die Kommunikation der zweiten Vorrichtung 7 mit der Zwischeninstanz 6 über das Netzwerk, zum Beispiel dem WAN, erfolgen.

Die Erfindung ist nicht durch die Beschreibung anhand der Ausführungsformen und Ausführungsbeispielen beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen, den Ausführungsformen oder den Ausführungsbeispielen angegeben ist.

### Bezugszeichenliste

- 1: System
- 2: Endbenutzerapplikation
- 3: Endvorrichtung
- 4: Benutzerapplikation
- 5: erste Vorrichtung
- 6: Zwischeninstanz
- 7: zweite Vorrichtung
- 8: lokale Verbindung
- 9: Quantenlink
- 10: Netzwerklink
- 11: erster Quantenschlüsselverteilungsendknoten
- 12: zweiter Quantenschlüsselverteilungsendknoten
- 13: erste Quantenschlüsselverteilungsbox
- 14: zweite Quantenschlüsselverteilungsbox
- 15: Hardware-Sicherheitsmodul

- S1..S6: Verfahrensschritte

## Patentansprüche

1. Verfahren zur Verifizierung eines ersten privaten Schlüssels, der zusammen mit einem zweiten privaten Schlüssel quantensicher mittels Quantenschlüsselverteilung erzeugt ist, umfassend
- Bereitstellen des ersten privaten Schlüssels an eine Endbenutzerapplikation (2) von einer Benutzerapplikation (4) einer ersten Vorrichtung (5) über eine lokale Verbindung (8),
- Senden einer ersten Identifikationsinformation von der Endbenutzerapplikation (2) oder der Benutzerapplikation (4) an eine Zwischeninstanz (6), wobei die erste Identifikationsinformation charakteristisch für den ersten privaten Schlüssel ist,
- Empfangen einer Verifizierungsantwort von der Endbenutzerapplikation (2) oder der Benutzerapplikation (4) von der Zwischeninstanz (6), wobei die Verifizierungsantwort charakteristisch ist für einen Abgleich der ersten Identifikationsinformation und einer zweiten Identifikationsinformation, wobei die zweite Identifikationsinformation charakteristisch ist für den zweiten privaten Schlüssel, der auf einer zweiten Vorrichtung (7) hinterlegt ist, und
- Verifizieren des ersten privaten Schlüssels von der Endbenutzerapplikation (2) oder der Benutzerapplikation (4) in Abhängigkeit der Verifizierungsantwort.

2. Verfahren gemäß Anspruch 1, weiter umfassend
- Senden einer Anfragenachricht von der Endbenutzerapplikation (2) an die Benutzerapplikation (4), wobei
- der erste private Schlüssel der Endbenutzerapplikation (2) in Abhängigkeit der Anfragenachricht bereitgestellt wird.

3. Verfahren gemäß Anspruch 1 oder 2, wobei
- die Endbenutzerapplikation (2) auf einer Endvorrichtung (3) ausgeführt wird, und
- die Benutzerapplikation (4) auf der ersten Vorrichtung (5) ausgeführt wird.

4. Verfahren gemäß einem der Ansprüche 1 bis 3, wobei
- der ersten Vorrichtung (5) und der zweiten Vorrichtung (7) jeweils Photonen jeweils eines verschränkten Photonenpaares bereitgestellt werden,
- Photonen mit jeweils einem vorgegebenen Zustand von der ersten Vorrichtung (5) an die zweite Vorrichtung (7) oder von der zweiten Vorrichtung (7) an die erste Vorrichtung (5) bereitgestellt werden, oder
- Photonen mit jeweils einem vorgegebenen Zustand von der ersten Vorrichtung (5) und der zweiten Vorrichtung (7) an ein Relais bereitgestellt werden,
- wobei der erste private Schlüssel von der ersten Vorrichtung (5) und der zweite private Schlüssel von der zweiten Vorrichtung (7) jeweils in Abhängigkeit der Photonen erzeugt werden.

5. Verfahren gemäß einem der Ansprüche 1 bis 4, wobei
- der erste private Schlüssel repräsentativ für einen einzelnen durch die Quantenschlüsselverteilung erzeugten ersten Schlüssel ist, und der zweite private Schlüssel repräsentativ für einen einzelnen durch die Quantenschlüsselverteilung erzeugten zweiten Schlüssel ist, oder
- der erste private Schlüssel und der zweite private Schlüssel jeweils repräsentativ für eine Verknüpfung eines ersten Sub-Schlüssels und eines zweiten Sub-Schlüssels ist, wobei der erste Sub-Schlüssel durch die Quantenschlüsselverteilung der ersten Vorrichtung bereitgestellt ist, und der zweite Sub-Schlüssel durch die Quantenschlüsselverteilung der zweiten Vorrichtung bereitgestellt ist.

6. Verfahren gemäß einem der Ansprüche 1 bis 5, wobei
- der erste private Schlüssel der Endbenutzerapplikation (2) in einer gesicherten Umgebung von der ersten Vorrichtung (5) bereitgestellt wird, und/oder
- der zweite private Schlüssel in einem Hardware-Sicherheitsmodul (15) der zweiten Vorrichtung (7) hinterlegt ist.

7. Verfahren gemäß einem der Ansprüche 1 bis 6, wobei
- ein erstes digitales Wallet in Abhängigkeit des ersten privaten Schlüssels erzeugt wird, und
- die erste Identifikationsinformation charakteristisch für zumindest einen Parameter des ersten digitalen Wallets ist.

8. Verfahren gemäß einem der Ansprüche 1 bis 7, wobei
- ein zweites digitales Wallet in Abhängigkeit des zweiten privaten Schlüssels erzeugt wird, und
- die zweite Identifikationsinformation charakteristisch für zumindest einen Parameter des zweiten digitalen Wallets ist.

9. Verfahren gemäß einem der Ansprüche 1 bis 8, wobei
- die Zwischeninstanz (6) Teil einer Blockchain ist, der die zweite Identifikationsinformation von der zweiten Vorrichtung (7) bereitgestellt wird, und
- die Zwischeninstanz (6) die Abfrage automatisch durchführt.

10. Verfahren gemäß einem der Ansprüche 1 bis 9, weiter umfassend
- Bereitstellen eines weiteren ersten privaten Schlüssels an eine weitere Endbenutzerapplikation (2) von einer weiteren Benutzerapplikation (4) einer weiteren ersten Vorrichtung (5) über eine weitere lokale Verbindung (8),
- Senden einer weiteren ersten Identifikationsinformation von der weiteren Endbenutzerapplikation (2) oder der weiteren Benutzerapplikation (4) an die Zwischeninstanz (6), wobei die weitere erste Identifikationsinformation charakteristisch für den weiteren ersten privaten Schlüssel ist,
- Empfangen einer weiteren Verifizierungsantwort von der weiteren Endbenutzerapplikation (2) oder der weiteren Benutzerapplikation (4) von der Zwischeninstanz (6), wobei die weitere Verifizierungsantwort charakteristisch ist für einen Abgleich der weiteren ersten Identifikationsinformation und einer weiteren zweiten Identifikationsinformation, wobei die weitere zweite Identifikationsinformation charakteristisch ist für einen weiteren zweiten privaten Schlüssel, der auf der zweiten Vorrichtung (7) hinterlegt ist, und
- Verifizieren des weiteren ersten privaten Schlüssels von der weiteren Endbenutzerapplikation (2) oder der weiteren Benutzerapplikation (4) in Abhängigkeit der weiteren Verifizierungsantwort.

11. Endvorrichtung (3), die dazu ausgebildet ist das Verfahren gemäß einem der Ansprüche 1 bis 10 durchzuführen.

12. System (1), umfassend
- eine erste Vorrichtung (5),
- eine zweite Vorrichtung (7), die mit der ersten Vorrichtung (5) verbunden ist, und
- eine Endvorrichtung (3) gemäß Anspruch 9, wobei
- die Endvorrichtung (3) bei der Bereitstellung des ersten privaten Schlüssels temporär mit der ersten Vorrichtung (5) verbunden ist.

13. System (1) gemäß Anspruch 12, wobei
- die erste Vorrichtung (5) und die zweite Vorrichtung (7) über einen Quantenlink (9) und ein Netzwerklink (10) miteinander verbunden sind.

14. Computerprogramm umfassend Befehle, die bei der Ausführung des Computerprogramms durch einen Computer diesen veranlassen, das Verfahren nach einem der Ansprüche 1 bis 10 auszuführen.

15. Computerlesbares Speichermedium, auf dem das Computerprogramm nach Anspruch 14 gespeichert ist.
